Europäisches Patentamt

European Patent Office

Office européen des brevets

(19)

(11) Veröffentlichungsnummer: **0 413 923 A1**

# (12) EUROPÄISCHE PATENTANMELDUNG

(21) Anmeldenummer: 90111897.6

(22) Anmeldetag: 22.06.90

(51) Int. Cl.⁵: **A47J 42/00**

Die Bezeichnung der Erfindung wurde geändert
(Richtlinien für die Prüfung im EPA, A-III, 7.3).

(30) Priorität: 26.06.89 IT 4164189

(43) Veröffentlichungstag der Anmeldung:
27.02.91 Patentblatt 91/09

(84) Benannte Vertragsstaaten:
AT BE CH DE DK LI LU NL SE

(71) Anmelder: **GLOE EXPORT-IMPORT GMBH**
**Muehlenstrasse 9/10**
**D-2060 Bad Oldesloe(DE)**

(72) Erfinder: **Marcato, Pietro**
**Via Rossignolo 8**
**I-35011 Campodarsego(IT)**
Erfinder: **Gloe, Klaus-Dieter**
**Muehlenstrasse 9/10**
**D-2060 Bad Oldesloe(DE)**

(74) Vertreter: **Ruschke, Olaf et al**
**Ruschke & Partner Pienzenauerstrasse 2**
**D-8000 München 80(DE)**

(54) Haushaltsmühle.

(57) Es handelt sich um eine Maschine für den Haushaltsgebrauch, die einer Nudelmaschine mit Walzen
ähnelt und drei Walzen (4, 5, 6) umfaßt, welche in
Dreiecksform angeordnet sind (wobei die dritte Walze sich unter den beiden oberen befindet) und deren
Oberflächen zum Erfassen des Mahlgutes gerändelt
sind. Die Spalte zwischen den Walzen (4, 5, 6) sind
einstellbar, und die Umfangsgeschwindigkeit der
Walzen (4, 5, 6) ist unterschiedlich, so daß zwischen
ihnen Reibung entsteht. Zur Erleichterung der Zufuhr
und der gleichmäßigen Verteilung des Mahlgutes
wird auf die Mühle ein kleiner Einfülltrichter gesetzt,
der am unteren Ende eine spaltförmige Öffnung
aufweist.

EP 0 413 923 A1

# HAUSHALTSMÜHLE MIT DREI WALZEN MIT GERÄNDELTER OBERFLÄCHE, VERSTELLBAREM SPALT UND UNTERSCHIEDLICHER UMFANGSGESCHWINDIGKEIT

In der Ernährung ist insbesondere bei Diätkost der Verbrauch von faserreichen Vollkornerzeugnissen verbreitet, wie z.B. von Kleie oder ähnlichen Produkten. Im Handel sind hierfür Mehle verschiedener Art zu mehr oder weniger hohem Preis erhältlich. Es schafft bei an einer Diät oder Kur Interessierten größeres Vertrauen, wenn sie unmittelbar aus Rohprodukten wie Samen, Körnern usw. selbst Mehle oder Schrote herstellen können.

Zur Herstellung von Mehlen, Schroten usw. greift man auf herkömmliche (oder elektrische) Haushaltsgeräte unterschiedlicher Art zurück, wobei die Ergebnisse häufig ungewiß sind und der Wirkungsgrad gering ist.

Im Handel finden sich die üblichen (ja sogar völlig unveränderten) Nudelmaschinen mit Walzen, deren Oberflächen abgewandelt wurden, so daß sie nicht mehr glatt, sondern mehr oder weniger mit unterschiedlich verteilten Rändelungen versehen sind.

Mit der vorhandenen Einstellvorrichtung (die mit Veränderung der Exzentrizität der Zapfenlager einer der beiden Walzen arbeitet) wird der Abstand zwischen den Walzen entsprechend der Dicke der zu zerkleinernden Körner und der gewünschten Feinheit des Mahlproduktes geeignet eingestellt. Da die beiden Anforderungen nach Verarbeitbarkeit von Körnern gewisser Dicke und Feinheit des Mahlproduktes bei den auf dem Markt erhältlichen Maschinen praktisch niemals gleichzeitig (d.h. bei nur einem Durchgang des Mahlgutes) erfüllt werden können, wird mit zwei oder mehr Durchgängen gearbeitet.

Wenn man aus den Samen (oder Körnern) statt Mehl nur "Flocken" herstellen möchte, stellt man entsprechend den jeweiligen Anforderungen einen mehr oder weniger großen Walzenabstand ein. Dennoch gelingt es nicht immer, "Flocken" der gewünschten Art zu erzielen, da je nach dem "Trockengrad" des Mahlgutes bisweilen ein "grob zerkleinertes" bzw. "gequetschtes" Mahlprodukt anfällt.

Hingegen gestattet die Maschine gemäß der vorliegenden Erfindung die Herstellung von "Flocken" im eigentlichen Sinne oder von mehr oder weniger feinen Mehlen.

Die Maschine gemäß der vorliegenden Erfindung besitzt nicht nur zwei, sondern drei Walzen, von denen zwei in gleicher Höhe nebeneinander angeordnet sind, während die dritte unmittelbar darunter in mittlerer Lage angebracht ist. Alle drei weisen zwecks Erfassung des zwischen ihnen durchlaufenden Mahlgutes gerändelte Oberflächen auf. Bei mindestens einer der drei Walzen (im allgemeinen bei einer der beiden oberen) kann der Achsabstand gegenüber den beiden anderen eingestellt werden, da die betreffende Walze in Exzenterlagern läuft, mit denen die Breite der Spalte zwischen den Walzen verändert werden kann. Mindestens eine der drei Walzen weist eine andere Umfangsgeschwindigkeit als die beiden anderen auf. Hierdurch wird auf das zwischen den Walzen durchlaufende Mahlgut nicht nur eine "Preßwirkung" (Quetschung), sondern auch eine Dehnwirkung (Reibung) ausgeübt. Auf diese Weise erhält man echte "Flocken", also kein grob zerkleinertes Mahlprodukt, bzw. auch bei nur einem Durchgang sehr feine Mehle.

Zur Verdeutlichung der vorstehenden Ausführungen wird auf die beigefügten Zeichnungen verwiesen.

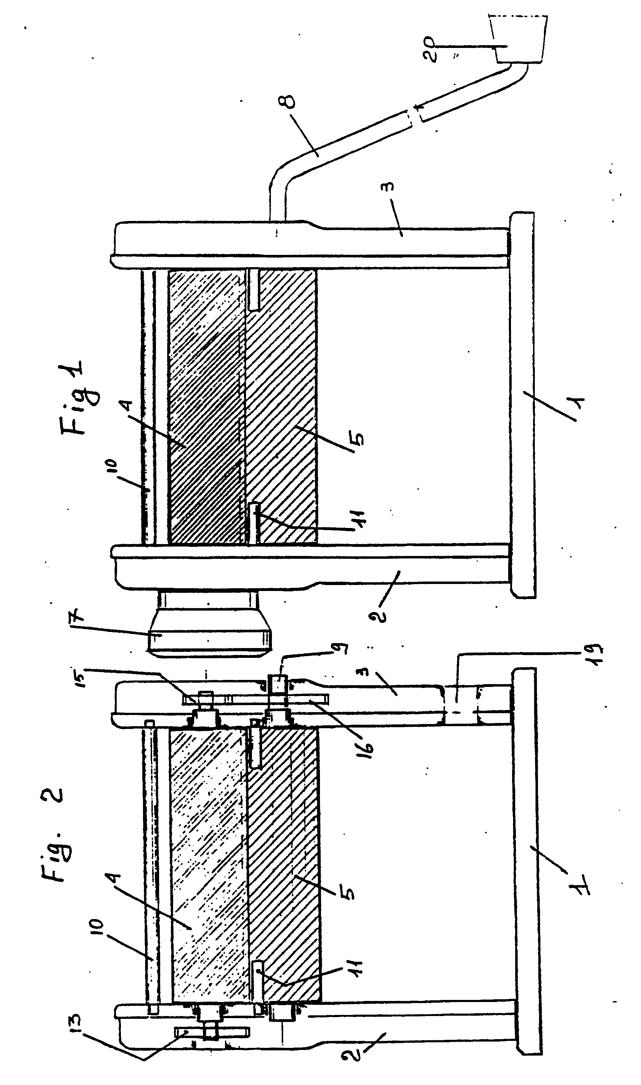

Fig. 1 zeigt die Maschine in der Ansicht von vorn. Es bedeuten: 1 - Fußplatte; 2 und 3 - linkes bzw. rechtes Lagerschild; 4 - eine der beiden oberen Walzen; 5 - untere Walze; 10 und 11 - zwei der vier Abstandhaltestangen (die Stange 11 ist zwecks größerer Klarheit der Gesamtdarstellung unterbrochen gezeichnet); 7 - Handrad für die Einstellung der Spaltbreiten zwischen den Walzen; 8 und 20 - Kurbel für den Walzenantrieb.

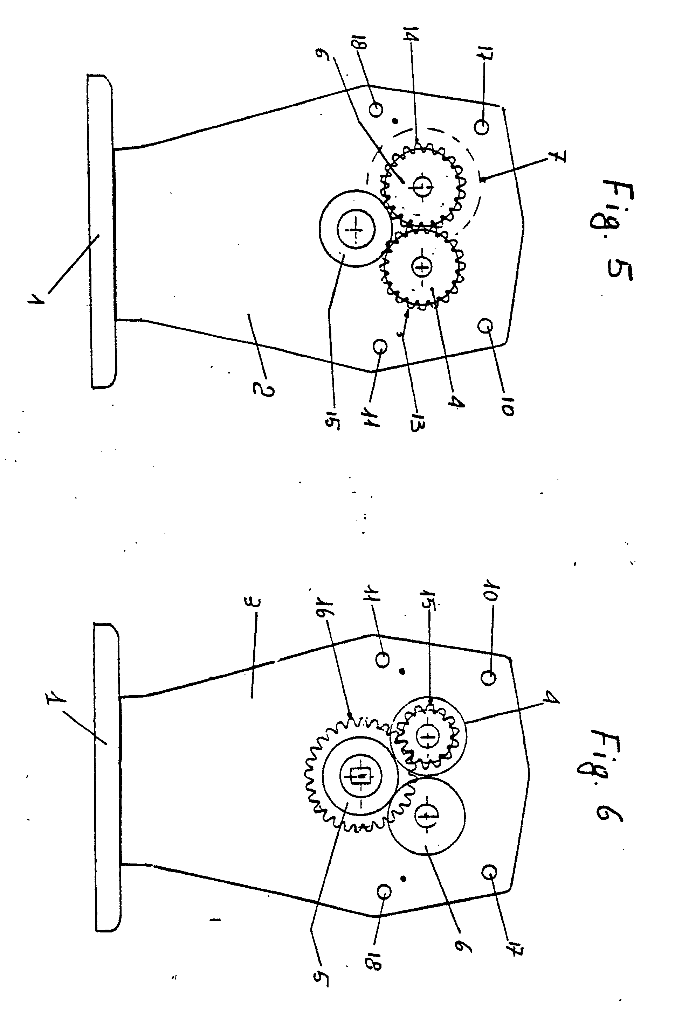

Fig. 2 zeigt die Maschine gemäß Fig. 1 ohne Handrad und Kurbel sowie mit durchsichtigen Seitenteilen. Erkennbar sind das Zahnrad 13, das mit dem in Fig. 5 sichtbaren Zahnrad 14 kämmt, sowie die Zahnräder 15 und 16. Mittels der Kurbel 20, deren Ende 8 in den Sitz 9 eingesetzt ist, wird die Walze 5 unmittelbar und über das Zahnradpaar 15 - 16 die Walze 4 angetrieben. Aufgrund des vorhandenen Übersetzungsverhältnisses dreht sich die Walze 4 schneller als die Walze 5.

19 bezeichnet eine Öffnung in dem Lagerschild 3, in die eine (nicht dargestellte) Zwinge zur Befestigung der Fußplatte 1 auf einer Auflagefläche eingesetzt wird.

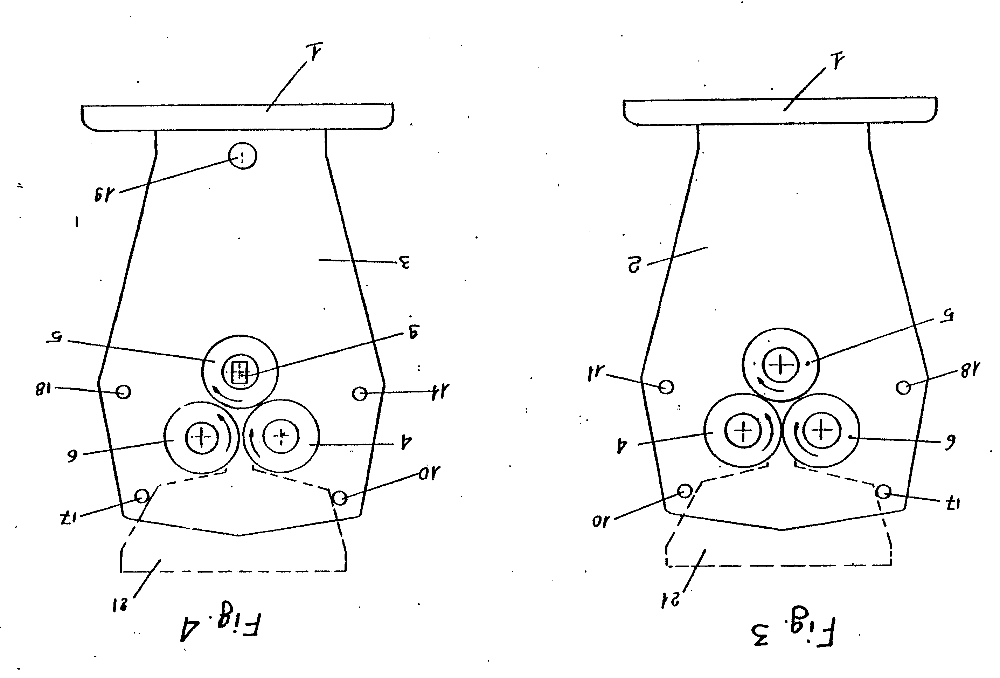

Fig. 3 zeigt eine Seitenansicht der Maschine, und zwar deren linke Seite. Insbesondere ist die gegenseitige Stellung der drei Arbeitswalzen 4, 5 und 6 hervorzuheben.

Man erkennt, wie die drei Walzen nahe beieinander stehen; insbesondere bestimmt der Abstand der Walzen 4 und 6 die Breite des Aufgabespaltes, während der Abstand der Walzen 4 und 5 die Feinheit des zwischen ihnen durchlaufenden Mahlproduktes bestimmt. Die Umfangsgeschwindigkeit der Walze 4 (die von der Walze 6 angetrieben wird) ist größer als die Umfangsgeschwindigkeit der Walze 5, weshalb das zwischen den beiden Walzen durchlaufende Mahlgut nicht nur "gequetscht", sondern auch "zerkleinert" wird. 17 und 18 bezeichnen die beiden anderen Abstandhaltestangen, die in der vorstehenden Fig. 2 nicht sichtbar sind. 21 bezeichnet eine Art Trichter für die Aufgabe des Mahlgutes, der dieses durch eine schlitzförmige Öffnung an seiner Unterseite dem mittleren Bereich der Oberseite der Walzen 6 und 4 zuleitet.

Fig. 4 ist ebenfalls eine schematische Seitenansicht der Maschine, und zwar zeigt sie deren rechte Seite. Man erkennt, wie die Walze 6 sowohl gegenüber der Walze 4 als auch gegenüber der Walze 5 versetzt ist.

Es leuchtet ein, daß das aufgegebene Mahlgut (Samen, Körner usw.) einem teilweisen Druck und einer Streckung (Reibung) zwischen den Walzen 6 und 5 unterliegt, da die Walze 6 sich schneller als die Walze 4 dreht.

Mit dieser Walzenanordnung erhält man "Flocken" im eigentlichen Sinne, die mehr oder weniger aufgeschlossen oder aufgebrochen sind.

Bei mittleren Stellungen der Walzen, wie sie in Fig. 3 und Fig. 4 dargestellt sind, erhält man Mahlprodukte, die zwischen "feinen" Mehlen und "Flocken" (oder Schroten) liegen. 9 bezeichnet den Sitz für die Aufnahme des Schaftes 8 der Kurbel 20, 19 die Öffnung für das Einsetzen der Befestigungszwinge.

Fig. 5 zeigt die linke Seitenansicht der Maschine, wobei für die Positionsnummern dieselben Bedeutungen wie oben gelten. Man erkennt die Zahnräder 13 und 14, die mit den Walzen 6 und 4 verbunden sind.

Gestrichelt ist die lage des Handrades 7 für die Verstellung der (nicht dargestellten) Exzentrizität angegeben, mit dem die Walze 6 gegenüber den beiden anderen Walzen verstellt werden kann.

Fig. 6 zeigt die rechte Seitenansicht der Maschine. Hier sind die Zahnräder 16 und 15 zu erkennen, wobei ein deutliches Übersetzungsverhältnis zwischen der Drehzahl der Walze 5 und der der Walze 4 deutlich wird. Es leuchtet ein, daß die unterschiedliche Umfangsgeschwindigkeit der Walzenoberflächen sich außer durch Zahnradgetriebe auch durch Walzen mit unterschiedlichem, geeignet gewähltem Durchmesser erreichen läßt.

Wie aus dem Vorstehenden hervorgeht, ist die Maschine gemäß der Erfindung in Gebrauch und Herstellung unkompliziert. Ihre Zweckmäßigkeit bildet eine Neuerung, welche eine bemerkenswerte Produktivität von der Flocken- bis zur Mehlherstellung bei nur einmaligem Durchlauf des Mahlgutes garantiert und gleichzeitig eine merkliche Kraftersparnis für den Bediener mit sich bringt.

Unter das Patent fallen auch ähnliche Ausführungen, die von der innovativen Idee der vorliegenden Erfindung ausgehen. Die dargestellte Ausführung ist als eine bevorzugte Lösung zu verstehen, welche lediglich als Beispiel angegeben wurde, und dementsprechend wird der Umfang der Erfindung nicht durch Maße, Werkstoffe, Form oder Anordnung der Teile begrenzt.

Auch Ausführungen, bei denen der Handantrieb durch einen Motorantrieb ersetzt ist, fallen unter das Patent.

Nicht kennzeichnend für die Erfindung sind die Vorrichtungen für die Aufgabe des Mahlgutes oder für das Auffangen des Mahlprodukts (z.B. Trichter, Schubfach usw.).

## Ansprüche

1) Haushaltsmühle mit drei Walzen mit gerändelten Oberflächen, einstellbaren Zwischenräumen und unterschiedlicher Umfangsgeschwindigkeit, dadurch gekennzeichnet, daß der wirksame Teil aus drei Walzen besteht, von denen zwei oben horizontal dicht nebeneinander angebracht sind und die dritte im mittleren Bereich darunter in geringer Entfernung von den beiden oberen angeordnet ist.

2) Mühle gemäß dem vorstehenden Anspruch, dadurch gekennzeichnet, daß mindestens eine der Walzen im Hinblick auf die gegenseitigen Abstände gegenüber den beiden anderen Walzen verstellbar ist.

3) Mühle gemäß Anspruch 1, dadurch gekennzeichnet, daß mindestens eine der Walzen eine andere Umfangsgeschwindigkeit als die beiden anderen aufweist.

4) Mühle gemäß Anspruch 1, dadurch gekennzeichnet, daß die Walzenoberflächen nicht glatt sind, sondern Rauhigkeiten (oder Rändelungen) aufweisen, die das Erfassen des Mahlgutes sicherstellen, so daß dieses zermahlen oder zerquetscht wird.

5) Mühle gemäß sämtlichen vorstehenden Ansprüchen, dadurch gekennzeichnet, daß sie insgesamt im Wesentlichen der hier gegebenen Beschreibung und Darstellung entspricht.

Fig. 2

Fig 1

EP 0 413 923 A1

Fig. 3

Fig. 4

Fig. 5

Fig. 6

| | Europäisches Patentamt | **EUROPÄISCHER RECHERCHENBERICHT** | Nummer der Anmeldung |

EP 90111897.6

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int Cl⁵) |
|---|---|---|---|
| A | US - A - 1 709 018 (C.T. HOWSON) * Gesamt * -- | 1,4 | A 47 J 42/00 |
| A | DE - C - 174 305 (RIEDEL) * Gesamt * -- | 1,4 | |
| A | DE - C - 482 377 (LEHNER) * Gesamt * -- | 1,4 | .. |
| A | GB - A - 165 270 (CRADDOCK) * Gesamt * -- | 1,4 | |
| A | US - A - 581 729 (KALMBACH) * Gesamt * -- | 1,4 | |
| A | US - A - 1 034 813 (MC GUIRE) * Gesamt * -- | 1,4 | RECHERCHIERTE SACHGEBIETE (Int Cl⁵) |
| A | US - A - 2 323 771 (HAZLE) * Gesamt * -- | 1,4 | A 47 J 42/00 |
| A | US - A - 3 039 704 (JYUNICHI GOTO) * Gesamt * -- | 1,4 | |
| A | US - A - 3 190 572 (JYUNICHI GOTO) * Gesamt * -- | 1,4 | |
| A | US - A - 3 491 952 (KROLOPP) * Gesamt * ---- | 1,4 | |

Der vorliegende Recherchenbericht wurde für alle Patentansprüche erstellt

| Recherchenort | Abschlußdatum der Recherche | Prüfer |
|---|---|---|
| WIEN | 28-09-1990 | BEHMER |